Europäisches Patentamt

European Patent Office

Office européen des brevets

(19)

(11) **EP 0 681 758 B1**

(12) **EUROPÄISCHE PATENTSCHRIFT**

(45) Veröffentlichungstag und Bekanntmachung des Hinweises auf die Patenterteilung:
**25.02.1998 Patentblatt 1998/09**

(51) Int Cl.6: **H02M 3/24**, H01F 27/28, H01F 19/04

(21) Anmeldenummer: **94901722.2**

(22) Anmeldetag: **17.12.1993**

(86) Internationale Anmeldenummer:
**PCT/CH93/00286**

(87) Internationale Veröffentlichungsnummer:
**WO 95/15609 (08.06.1995 Gazette 1995/24)**

(54) **DC/DC-WANDLER FÜR NIEDRIGE AUSGANGSSPANNUNGEN**

DC/DC CONVERTER FOR LOW OUTPUT VOLTAGES

CONVERTISSEUR CONTINU-CONTINU POUR BASSES TENSIONS DE SORTIE

(84) Benannte Vertragsstaaten:
**CH DE FR GB IT LI SE**

(30) Priorität: **01.12.1993 CH 3578/93**

(43) Veröffentlichungstag der Anmeldung:
**15.11.1995 Patentblatt 1995/46**

(73) Patentinhaber: **MELCHER AG**
**CH-8610 Uster (GB)**

(72) Erfinder:
• **MILAVEC, Johann**
**CH-5200 Windisch (CH)**

• **SPRINGETT, Nigel**
**D-78100 Feiburg-Tiengen (DE)**

(74) Vertreter: **Salgo, Reinhold Caspar, Dr.**
**Patentanwalt**
**Toebelistrasse 88**
**8635 Dürnten (CH)**

(56) Entgegenhaltungen:
**EP-A- 0 318 955**          **EP-A- 0 382 307**
**DE-A- 3 718 383**

EP 0 681 758 B1

# Beschreibung

Die vorliegende Erfindung betrifft einen DC/DC-Wandler für niedrige Ausgangsspannungen nach dem Oberbegriff des Patentanspruches 1. Spannungsregler, sowohl nach dem Durchflussals auch nach dem Sperrwandlerprinzip arbeitende, sind in den letzten Jahren viele bekannt geworden, so z.B. aus O. Kilgenstein, Schaltnetzteile in der Praxis, Würzburg 1992, um eine gute Uebersicht zu erwähnen. In den letzten Jahren sind allerdings auch die dazu verwendeten Bauelemente stetig verbessert worden, so dass es möglich wurde, die Arbeitsfrequenzen von ursprünglich einigen Kilohertz bis heute gegen 500 kHz zu steigern. Damit sinkt jedoch auch insgesamt die Zahl der Windungen des Transformators in solchen Schaltreglern. Zudem werden heute vermehrt tiefere Ausgangsspannungen benötigt; zu den bisher üblichen 5 Volt treten jetzt Ausgangsspannungen um 3 Volt, ja sogar 2 Volt. Da man bei der Dimensionierung der Transformatoren von Schaltreglern für 5 Volt bereits gelegentlich bei einer einzigen Sekundarwicklung angekommen ist, wie dies beispielsweise aus der DE-A- 3718383 bekannt ist, lassen sich kleinere Spannungen - bei oft hohen Strömen - nicht mehr rationell realisieren.

Die Aufgabe, die mit der vorliegenden Erfindung gelöst werden soll, ist die Schaffung eines Gleichspannungs/ Gleichspannungs-Wandlers für kleine Ausgangsspannungen und hohe Ströme unter Zurückgewinnung des Entwicklungsspielraumes trotz der genannten Einschränkungen, die sich aus der Natur der Sache ergeben.

Die Lösung der gestellten Aufgabe ist wiedergegeben im Kennzeichnenden Text des Patentanspruches 1 hinsichtlich ihrer Hauptmerkmale, in den Patentansprüchen 2 bis 8 hinsichtlich weiterer Ausbildungen.

Anhand der beiliegenden Zeichnung wird der Erfindungsgedanke in mehreren Ausführungsbeispielen erläutert.

Es zeigen

Fig. 1    einen bekannten Durchflusswandler,
Fig. 2    einen bekannten Transformator-Topfkern im Schnitt,
Fig. 3    die Draufsicht auf einen Topfkern,
Fig. 4    die Draufsicht auf einen sog. X-Kern,
Fig. 5    ein erstes Ausführungsbeispiel eines erfindungsgemässen Transformators,
Fig. 6    einen Durchflusswandler unter Benützung des Transformators von Fig. 5,
Fig. 7    eine Variante zu Fig. 6,
Fig. 8    einen Gegentaktwandler mit einem erfindungsgemässen Transformator,
Fig. 9    ein zweites Ausführungsbeispiel eines erfindungsgemässen Transformators,
Fig. 10   ein drittes Ausführungsbeispiel eines erfindungsgemässen Transformators,

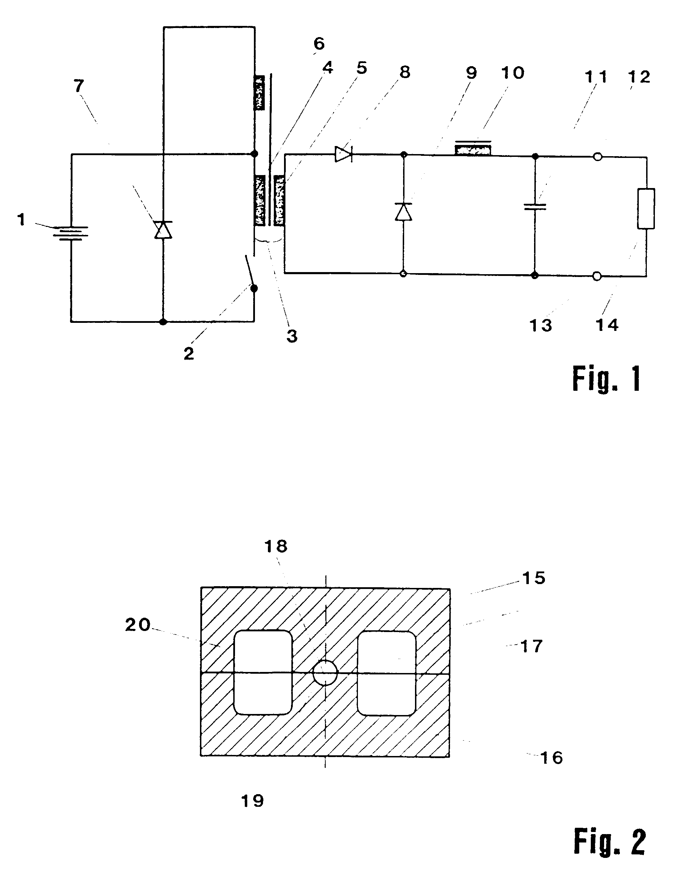

Fig. 1 zeigt - als ein Beispiel für viele - einen bekannten Durchflusswandler. Eine als Batterie 1 dargestellte Stromquelle mit einer ersten Spannung $U_1$ speist über einen elektronischen Schalter 2 die Primärwicklung 4 eines Transformators 3. Ueber eine Diode 7 wird eine weitere, auf der Primärseite des Transformators 3 befindliche Wicklung, die Demagnetisierungswicklung 6 gespeist. Sekundärseitig weist der Transformator 3 eine Sekundärwicklung 5 auf, deren Vorwärtsstrom über eine Diode 8 und eine Speicnerdrossel 10 einen Speicherkondensator 11 auflädt. Die andere Seite der Sekundärwicklung 5 ist einerseits mit der Kathode einer Freilaufdiode 9, anderseits mit dem anderen Anschluss des Speicherkondensators 11 verbunden. Die Freilaufdiode 9 leitet im anderen Halbtakt. Die Spannung $U_2$ über dem Speicherkondensator 11 liegt gleichzeitig an zwei Ausgängen 12 (positiv) und 13 (negativ). Mit der Ziffer 14 ist eine äussere Last bezeichnet.

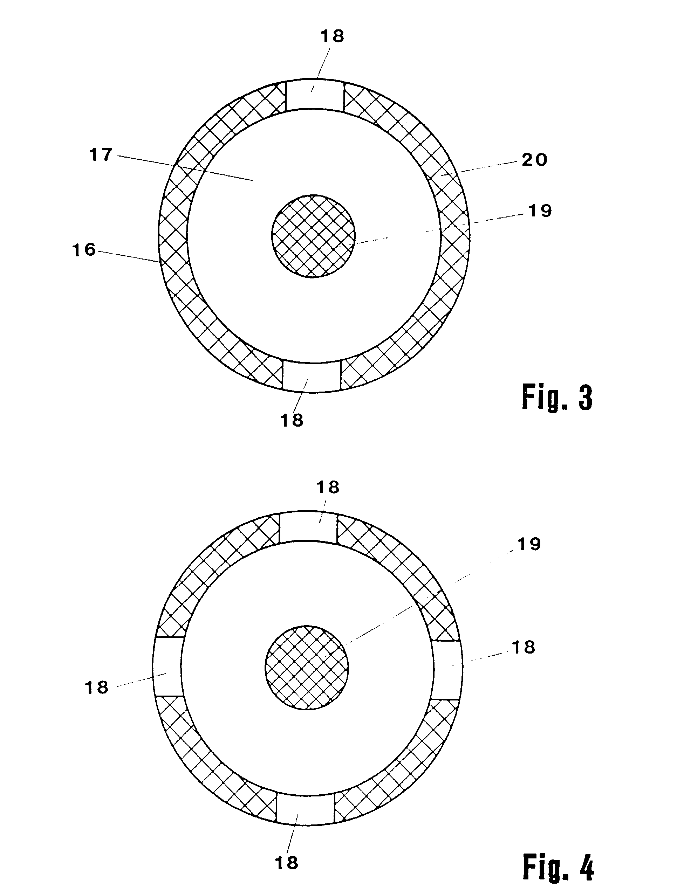

Der mit 3 bezeichnete Transformator - ebenfalls Stand der Technik - ist in Fig. 2, 3 im Schnitt und in der Draufsicht dargestellt. Zwei im Prinzip gleichgestaltete Hälften 15, 16 bilden zusammen einen sog. Topf-Kern. Durch das Zusammenfügen der zwei Hälften 15, 16 zu einem Ganzen entsteht ein ringförmiger Hohlraum 17, der die - hier nicht gezeichneten - Wicklungen aufnimmt. Durch zwei Oeffnungen 18 werden die Wicklungsenden herausgeführt. In der Mitte des ringförmigen Hohlraums 17 befindet sich der mit 19 bezeichnete Mittelschenkel des Transformators, der den gesamten, von der Primärwicklung 4 erzeugten magnetischen Fluss führt; die Rückführung geschieht über die Aussenschenkel, die mit 20 bezeichnet sind.

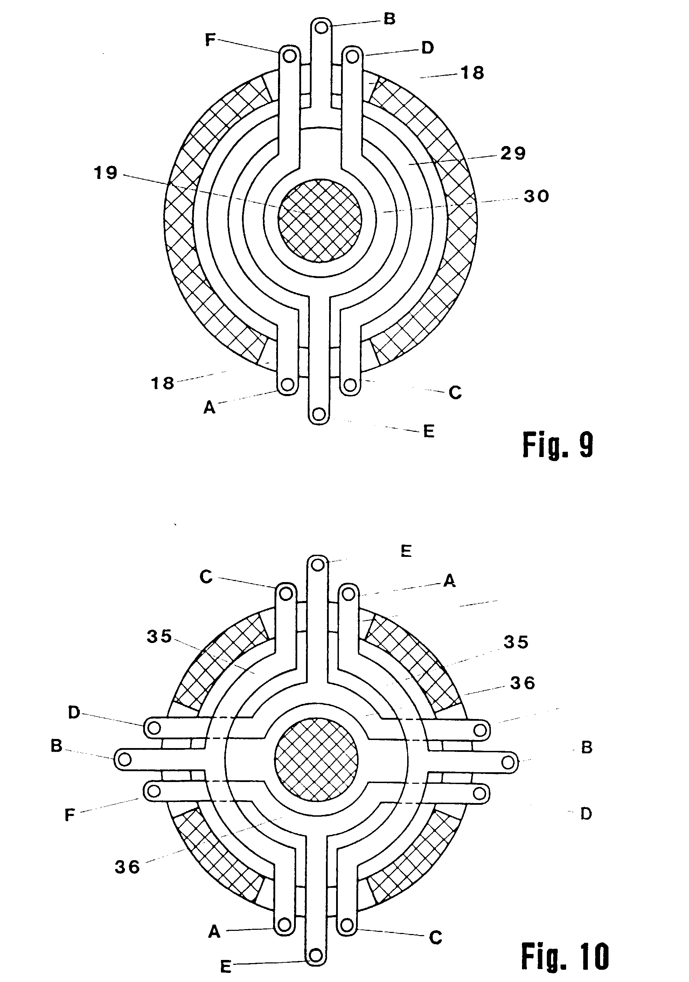

In Fig. 4 ist eine Formvariante zu Fig. 2, 3 dargestellt, hier lediglich in der Draufsicht auf die untere Hälfte 16. Der Unterschied zum Topf-Kern von Fig. 2, 3 besteht darin, dass vier Oeffnungen 18 vorhanden sind. Topfkerne des Typs von Fig. 2, 3 sind der magnetischen Topologie nach E-Kerne, wobei bei der Gestaltung der Teile 20 und auch der Oeffnungen 18 eine Vielfalt von Formen in Gebrauch sind. Durch die gezeichneten Bauformen wird bewirkt, dass der im Mittelschenkel 19 erzeugte magnetische Fluss in mehrere Teilflüsse unterteilt wird, die je die Hälfte oder einen Viertel des gesamten Flusses umfassen. Auf dieser Tatsache beruht die erfindungsgemässe Ausgestaltung der Sekundärwicklung 5 gemäss Fig. 1, wie sie nun in Fig. 9 und 10 dargestellt ist.

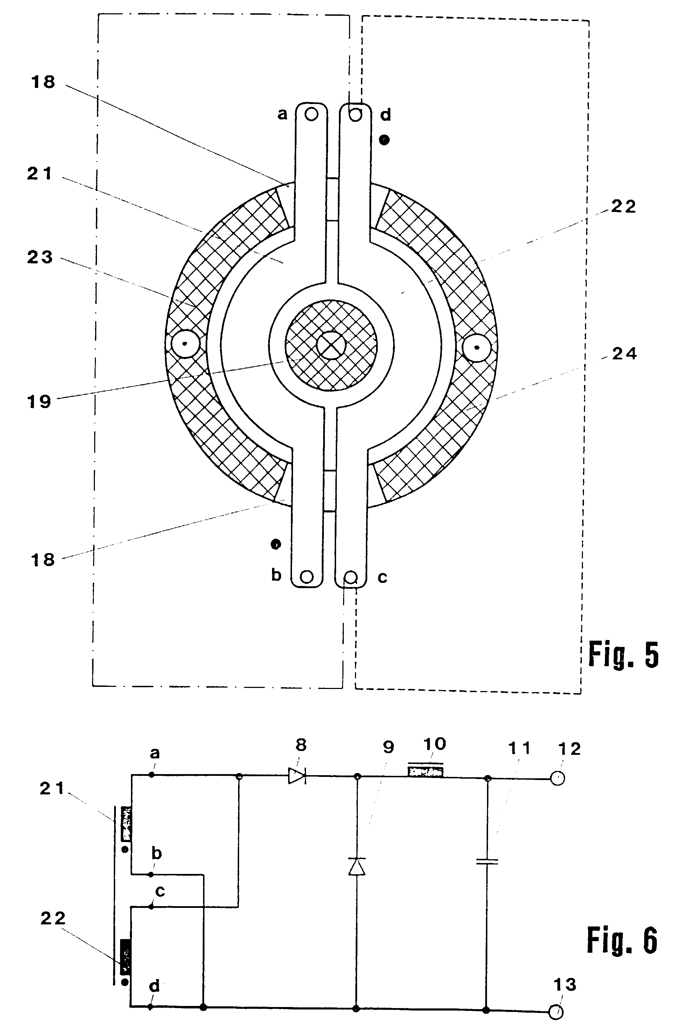

Fig. 5 zeigt einen Topf-Kern gemäss Fig. 3, dessen Oeffnungen 18 so breit sind, dass vier Anschlüsse a, b, c, d von einer als zwei Halbwindungen 21, 22 ausgeführten Sekundärwicklung Platz finden. Als Halbwindung wird hier im folgenden eine Windung bezeichnet, welche, zusammen mit ihren äusseren Anschlussverbindungen, nur die Hälfte des gesamten von der Primärwicklung erzeugten magnetischen Flusses umschlingt. Entsprechend wird als bruchteilige Windung eine Windung bezeichnet, welche, zusammen mit ihren äusseren Anschlussverbindungen, nur einen bestimmten

2

Bruchteil des gesamten von der Primärwicklung erzeugten magnetischen Flusses umschlingt. Für den magnetischen Fluss, der im Kern 19 erzeugt und in Aussenschenkeln 23, 24 rückgeführt wird (durch die Vektorsymbole ⊗ und ⊙ angedeutet), gelten nun folgende Beziehungen:

$$\Phi = (\vec{B}_K \bullet \vec{A}_K)_{19} = (\vec{B}_Z \bullet \vec{A}_Z)_{23} + (\vec{B}_Z \bullet \vec{A}_Z)_{24}$$

wo

$\Phi$ = Magn. Fluss
$\vec{B}_K$ = magn. Feld im Mittelschenkel
$\vec{B}_Z$ = magn. Feld im Aussenschenkel
$\vec{A}_K$ = Flächenvektor des Mittelschenkels
$\vec{A}_Z$ = Flächenvektoren der Aussenschenkel

und die Indizes 19, 23, 24 jeweils das Bauteil bezeichnen.

Aus Symmetriegründen gilt auch

$$(\vec{B}_Z \bullet \vec{A}_Z)_{23} = (\vec{B}_Z \bullet \vec{A}_Z)_{24}$$

Damit umschliesst beispielsweise die Halbwicklung 22 den halben Fluss, gleichgültig ob der Strompfad I den Zweig 24 (gestrichelt) oder den Mittelschenkel 19 und den Aussenschenkel 23 (mit Punkt-Strich gekennzeichnet) umschliesst: Umschliesst er den Aussenschenkel 24, so ist

$$\Phi_{cd} = \Phi/2,$$

Umschliesst er den Mittelschenkel 19 und den Aussenschenkel 23, so ist

$$\Phi_{cd} = - (-\Phi + \Phi/2) = \Phi/2,$$

Wegen der Vorzeichenumkehr des Vektors der durch den Strompfad umschlossenen Fläche.
Da

$$U_{ind} = - \frac{d\Phi}{dt} = - \left(\bar{A}\frac{d\Phi}{dt}\right)$$

ist die induzierte Spannung streng proportional zur umschlossenen Fläche: Eine Halbwindung, die den halben Fluss umfasst, erzeugt also die halbe Spannung einer ganzen, den ganzen Fluss umfassenden Windung.

Dies kann generell auf beliebige Bruchteile des Flusses und beliebige Teilwindungen erweitert werden. Fig. 6 zeigt den Sekundärteil des Durchflusswandlers nach Fig. 1 mit einer gemäss Fig. 5 aufgeteilten Sekundärwicklung in zwei Halbwindungen 21, 22. Sie sind im Schema gemäss Fig. 6 parallel geschaltet; die Bezeichnungen a - d der Enden der Halbwindungen 21, 22 sind von Fig. 5 übernommen, was auch durch die Punkte bei b und d angedeutet ist.

Selbstverständlich können die Halbwindungen 21, 22 um beliebige Vielfache von ½ verlängert werden, also 1, 1½, 2, 2½ Windungen aufweisen. Das Entsprechende gilt beispielsweise auch für Viertelwindungen, die in einen Topf-Kern gemäss Fig. 4 eingelegt werden können. Vier Viertelwindungen haben dann auch eine entsprechende Modifikation der Fig. 6 zur Foige: Es werden vier Sekundärwicklungen parallel geschaltet.

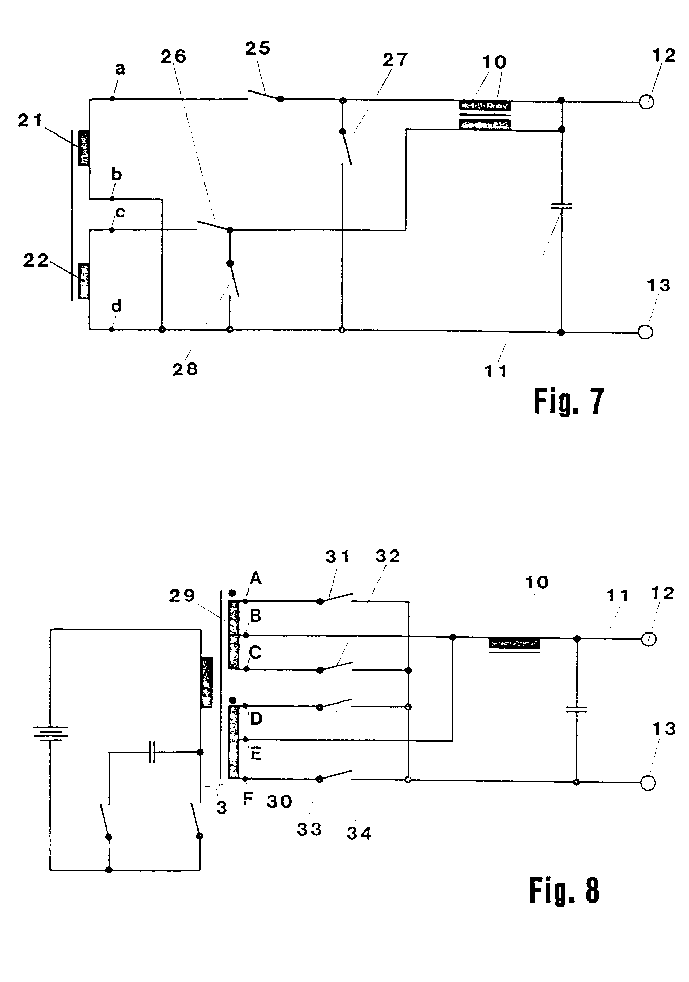

Fig. 7 ist eine weitere Darstellung eines Durchflusswandlers mit zwei Halbwindungen. Hier sind die Dioden 8, 9 von Fig. 1 und 6 durch elektrische Schalter, beispielsweise MOSFETs 25, 26, 27, 28 ersetzt. Die entsprechenden Ansteuerungen und der Primärteil sind weggelassen. Entsprechend der Verdoppelung der Schaltelemente ist auch die Speicherdrossel 10 mit zwei parallelen Wicklungen ausgeführt, womit den hohen Strömen Rechnung getragen wird.

Besonders vorteilhaft ist die erfindungsgemässe Aufteilung der Sekundärwicklung in bruchteilige Windungen bei Gegentaktanordnungen jeder Art. Fig. 8 zeigt ein Ausführungsbeispiel eines Gegentaktwandlers mit einer bekannten Primärseitenbeschaltung. Sekundärseitig besteht der Transformator 3 aus zwei Wicklungen 29, 30 mit je einer Windung, wobei beide je eine Mittelanzapfung B, E aufweisen. Die beiden Mittelanzapfungen B, E sind dauernd direkt mit dem Eingang der Speicherdrossel 10 verbunden, die Enden A, C bzw. D, F der Wicklungen 29, 30 werden durch vier elektronische Schalter, 31, 32, 33, 34 beispielsweise MOSFETs wechselweise auf das Potential des - negativen - Ausgangs 13 geschaltet.

Fig. 9 zeigt die Geometrie der Sekundärseite des Transformators 3. Die zwei Wicklungen 29, 30 sind so um den Mittelschenkel 19 herumgelegt, dass die Mittelanzapfungen B, E einander gegenüberliegend in je eine der beiden Oeffnungen 18 zu liegen kommen. Die Anschlüsse A, C bzw. D, F liegen in der gleichen Oeffnung 18, wie die Mittelanzapfung E bzw. B. Anstatt konzentrisch zueinander, können die Wicklungen 29, 30 bei identischer Form und Grösse auch in axialer Richtung - voneinander isoliert - aufeinander liegen.

Fig. 10 zeigt ein Variante zu Fig. 9. Hier weisen die Sekundärwicklungen des Transformators 3 nur je eine halbe Windung 35, 36 auf, mit je einer Mittelanzapfung B, E, so dass von den Mittelanzapfungen B, E bis zu den Anschlüssen A, C bzw. D, F nur je eine Viertelswindung sich erstreckt. Wegen der Belastungssymmetrie des Transformator-Kerns ist jede Halbwindung 35, 36 doppelt ausgeführt, und die Halbwindungen mit der gleichen Bezugsnummer werden parallel geschaltet.

Eine nicht gezeichnete erfindungsgemässe Variante eines Transformators weist drei um je 120° versetzte Oeffnungen 18 auf; die zwei Windungen erstrecken sich je über einen Bogen von 240° und weisen wiederum eine Mittelanzapfung auf. Sie sind um 120° versetzt in den ringförmigen Hohlraum 17 eingelegt.

Besonders vorteilhaft ist die vorliegende Erfindung dann, wenn in einem Gleichspannungs/Gleichspannungs-Wandler mehrere unterschiedliche Spannungen erzeugt werden sollen. Sind beispielsweise 5 Volt, 3.3 Volt und 2.5 Volt als geregelte Ausgangsspannungen vorgesehen, und kann die Rohspannung für den 5 Volt-Ausgang bereits durch eine Sekundärwicklung mit einer einzigen Windung erzeugt werden, so sind für die zwei anderen Spannungen Sekundärwicklungen von 2/3 bzw. 1/2 Windung - bei Verwendung geeigneter Topf-Kerne - angebracht.

## Patentansprüche

1. Gleichspannungs-/Gleichspannungs-Wandler für niedrige Spannungen sowohl nach dem Durchfluss-, als auch nach dem Sperrwandler- und nach dem Gegentaktwandlerprinzip arbeitend, mit einem die Primärspannung zerhackenden Primärteil, einem von der zerhackten Primärspannung ($U_1$) gespeisten Transformator (3) mit Primärwicklung (4) und mindestens einer Sekundärwicklung (5, 21, 22, 29, 30), die mit ihren Anschlüßen mit (3) dem Sekundärteil mit Speicherdrossel (10) und auf die Sekundärspannung ($U_O$) aufgeladenem Speicherkondensator (11) vebunden ist, wobei der Transformator (3) einen Mittelschenkel (19) aufweist, der den von der Primärwicklung erzeugten magnetischen Fluss $\Phi$ führt, und mindestens zwei Aussenschenkel (20) aufweist, auf welche der genannte magnetische Fluss $\Phi$ zu gleichen Teilen aufgeteilt ist, und die Aussenschenkel (20) Oeffnungen (18) aufweisen, dadurch gekennzeichnet, dass die Sekundärwicklung (5, 21, 22, 29, 30) aus mehreren, symmetrisch von Strom durchflossenen, bruchteiligen Segmenten einer windung besteht, die durch die Öffnungen geführt sind, wobei die Sekundärwicklung mit ihren Auschlüßen die Aussenschenkel umfassen.

2. Gleichspannungs-/Gleichspannungs-Wandler nach Patentanspruch 1, dadurch gekennzeichnet, dass die Sekundärwicklung (5, 21, 22, 29, 30) aus n Segmenten von der Länge eines ganzzahligen Bruchteils einer ganzen Windung besteht, welche Segmente damit je die Länge $\frac{1}{n}$ einer ganzen Windung aufweisen, und n eine kleine ganze Zahl darstellt.

3. Gleichspannungs-/Gleichspannungs-Wandler nach Patentanspruch 2, dadurch gekennzeichnet, dass zwei Sekundärwicklungen (21, 22) vorhanden sind, welche je aus einer halben Windung bestehen.

4. Gleichspannungs-/Gleichspannungs-Wandler nach Patentanspruch 2, dadurch gekennzeichnet, dass zwei Sekundärwicklungen (29, 30) vorhanden sind, welche je aus einer ganzen Windung bestehen, die je eine Mittelanzapfung (B, E) aufweisen, dergestalt, dass die Länge jeder Wicklung von jedem Ende bis zur Mittelanzapfung (B, E) je eine halbe Windung beträgt.

5. Gleichspannungs-/Gleichspannungs-Wandler nach Patentanspruch 2, dadurch gekennzeichnet, dass eine Sekundärwicklung (5) vorhanden ist, welche in n Teile unterteilt ist, wobei jeder Teil $\frac{m}{n}$ einer Windung umfasst, die n Teile parallel geschaltet sind und m und n kleine ganze Zahlen sind.

6. Gleichspannungs-/Gleichspannungs-Wandler nach Patentanpruch 1, dadurch gekennzeichnet, dass die Länge eines Segmentes der Sekundärwicklung (5) ein unechter Bruchteil einer ganzen Windung ist und damit die Form $\frac{m}{n}$ x Länge einer Windung aufweist, wo $m \geq n$, und n solcher Segmente vorhanden sind.

7. Gleichspannungs-/Gleichspannungs-Wandler nach Patentanspruch 6, dadurch gekennzeichnet, dass die Sekundärwicklung (5) in n Teile der Länge $\frac{m}{n}$ aufgeteilt ist und alle n Teile parallel geschaltet sind.

8. Gleichspannungs-/Gleichspannungs-Wandler nach Patentanspruch 5, dadurch gekennzeichnet, dass mehrere Sekundärwicklungen vorhanden sind, welche mehrere Ausgänge des Gleichspannungs-/Gleichspannungs-Wandlers speisen, welche Sekundärwicklungen unterschiedliche Längen haben.

## Claims

1. A direct voltage - direct voltage converter for low voltages, operating as a forward converter, flyback converter or push-pull converter, with a primary section chopping the primary voltage, a transformer (3) fed with the chopped primary voltage ($U_1$) with a primary winding (4) and at least one secondary winding (5, 21, 22, 29, 30) which is connected via its connections to the secondary section with smoothing choke (10) and the backup capacitor (11) charged with secondary voltage ($U_0$), wherein the transformer (3) is provided with a middle limb (19) which conducts the magnetic flux $\phi$ generated by the primary winding and has at least two outer limbs (20) amongst which the aforementioned magnetic flux @ is equally divided, and wherein the outer limbs (20) have openings (18), **characterised in that** the secondary winding (5, 21, 22, 29, 30) comprises a plurality of fractional segments of a turn through which current flows symmetrically and which are routed through the openings, wherein the secondary winding envelopes the outer limbs with its connections.

2. A direct voltage - direct voltage converter according to claim 1, **characterised in that** the secondary winding (5, 21, 22, 29, 30) comprises n segments of the length of a whole-number fraction of a whole turn, so that each segment thus has the length **1/n** of a whole turn where **n** is a small whole number.

3. A direct voltage - direct voltage converter according to claim 2, **characterised in that** two secondary windings (21, 22) are provided, each comprising a half turn.

4. A direct voltage - direct voltage converter according to claim 2, **characterised in that** two secondary windings (29, 30) are provided, each comprising a full turn and each having a central tapping point (B, E) such that the length of each winding from each end to the central tapping point (B, E) is half a turn.

5. A direct voltage - direct voltage converter according to claim 2, **characterised in that** one secondary winding (5) is provided and is divided into **n** parts, wherein each part **m/n** comprises one turn, the **n** parts are connected in parallel and **m** and **n** are whole small numbers.

6. A direct voltage - direct voltage converter according to claim 1, **characterised in that** the length of a segment of the secondary winding (5) is an improper fraction of a whole turn and thus has the form **m/n** $\times$ length of one turn, where **m $\geq$ n** and **n** such segments are present.

7. A direct voltage - direct voltage converter according to claim 6, **characterised in that** the secondary winding (5) is divided into **n** parts of length **m/n** and all **n** parts are arranged in parallel.

8. A direct voltage - direct voltage converter according to claim 5, **characterised in that** a plurality of secondary windings are provided which feed a plurality of outputs of the direct voltage - direct voltage converter and have secondary windings of differing lengths.

**Revendications**

1. Convertisseur continu-continu pour tensions basses fonctionnant selon le principe du convertisseur à circulation ou du convertisseur à oscillateur bloqué et du convertisseur symétrique, comprenant un élément primaire qui hache la tension primaire, et un transformateur (3) alimenté par la tension primaire ($U_1$) hachée et formé d'un enroulement primaire (4) et d'au moins un enroulement secondaire (5, 21, 22, 29, 30) qui est relié, avec ses raccordements, à l'élément secondaire comportant un self d'accumulation (10) et un condensateur d'accumulation (11) chargé à la tension secondaire ($U_0$), étant précisé que le transformateur (3) comporte une branche centrale (19) qui guide le flux magnétique $\Phi$ généré par l'enroulement primaire, et au moins deux branches extérieures (20) sur lesquelles le flux magnétique $\Phi$ est réparti en proportions égales, et que les branches extérieures (20) ont des ouvertures (18),

caractérisé en ce que l'enroulement secondaire (5, 21, 22, 29, 30) se compose de plusieurs segments fractionnaires d'une spire qui sont traversés symétriquement par le courant et qui passent par les ouvertures, l'enroulement secondaire entourant avec ses raccordements les branches extérieures.

2. Convertisseur continu-continu selon la revendication 1, caractérisé en ce que l'enroulement secondaire (5, 21, 22, 29, 30) se compose de **n** segments d'une longueur égale à une fraction de nombres entiers d'une spire entière, lesquels segments ont ainsi chacun une longueur égale à **1/n** d'une spire entière, et **n** représente un chiffre entier faible.

3. Convertisseur continu-continu selon la revendication 2, caractérisé en ce qu'il est prévu deux enroulements secondaires (21, 22) qui se composent chacun d'une demi-spire.

4. Convertisseur continu-continu selon la revendication 2, caractérisé en ce qu'il est prévu deux enroulements secondaires (29, 30) qui se composent chacun d'une spire entière et qui comportent chacun une prise médiane (B, E), de telle sorte que la longueur de chaque enroulement, de chaque extrémité à la prise médiane (B, E), est égale à une demi-spire.

5. Convertisseur continu-continu selon la revendication 2, caractérisé en ce qu'il est prévu un enroulement secondaire (5) qui est divisé en **n** éléments, chaque élément comprenant **m/n** d'une spire, les **n** éléments étant montés en parallèle et **m** et **n** étant des nombres entiers faibles.

6. Convertisseur continu-continu selon la revendication 1, caractérisé en ce que la longueur d'un segment de l'enroulement secondaire (5) est un nombre fractionnaire d'une spire entière et présente ainsi la forme **m/n** x longueur d'une spire, avec **m $\geq$ n**, et il est prévu **n** segments de ce type.

**7.** Convertisseur continu-continu selon la revendication 6, caractérisé en ce que l'enroulement secondaire (5) est divisé en **n** éléments d'une longueur égale à **m/n** et les **n** éléments sont tous montés en parallèle.

**8.** Convertisseur continu-continu selon la revendication 5, caractérisé en ce qu'il est prévu plusieurs enroulements secondaires qui alimentent plusieurs sorties du convertisseur continu-continu et qui ont des longueurs différentes.

**Fig. 1**

**Fig. 2**

18

17

16

20

19

18

**Fig. 3**

18

19

18

18

18

**Fig. 4**

**Fig. 5**

**Fig. 6**

Fig. 7

Fig. 8

Fig. 9

Fig. 10